(19) Europäisches Patentamt
European Patent Office
Office européen des brevets

(11) EP 1 608 706 B1

(12) FASCICULE DE BREVET EUROPEEN

(45) Date de publication et mention de la délivrance du brevet:
**28.12.2011 Bulletin 2011/52**

(21) Numéro de dépôt: **04742319.9**

(22) Date de dépôt: **23.03.2004**

(51) Int Cl.:
***C08L 83/04*** *(2006.01)* ***C08L 83/12*** *(2006.01)*
***H01B 1/04*** *(2006.01)* ***H01M 8/10*** *(2006.01)*
***C08G 77/42*** *(2006.01)*

(86) Numéro de dépôt international:
**PCT/FR2004/000709**

(87) Numéro de publication internationale:
**WO 2004/090038 (21.10.2004 Gazette 2004/43)**

# (54) COMPOSITION RETICULABLE POUR ELECTROLYTE DE BATTERIE

HÄRTBARE ZUSAMMENSETZUNG FÜR EINE BATTERIEELEKTRODE

SETTING COMPOSITION FOR A BATTERY ELECTROLYTE

(84) Etats contractants désignés:
**AT BE BG CH CY CZ DE DK EE ES FI FR GB GR HU IE IT LI LU MC NL PL PT RO SE SI SK TR**

(30) Priorité: **03.04.2003 FR 0304157**

(43) Date de publication de la demande:
**28.12.2005 Bulletin 2005/52**

(73) Titulaire: **RHODIA CHIMIE**
**92512 Boulogne Billancourt Cedex (FR)**

(72) Inventeurs:
- **GAMBUT-GAREL, Lucile**
**F-69003 LYON (FR)**
- **GEORGE, Catherine**
**F-69290 SAINT GENIS LES OLLIERES (FR)**
- **VERGELATI, Carroll**
**F-38118 SAINT BAUDILLE DE LA TOUR (FR)**
- **PUJOL, Jean-Marc**
**F-69140 Rilleux (FR)**

(74) Mandataire: **Valentino, Cédric et al**
**Rhodia Services DPI**
**Centre de Recherches de Lyon**
**BP 62**
**69192 Saint-Fons Cedex (FR)**

(56) Documents cités:
**EP-A- 0 372 584 US-A1- 2002 051 911**

- **PATENT ABSTRACTS OF JAPAN vol. 014, no. 168 (E-0912), 30 mars 1990 (1990-03-30) & JP 02 024976 A (HITACHI MAXELL LTD), 26 janvier 1990 (1990-01-26)**
- **PATENT ABSTRACTS OF JAPAN vol. 017, no. 442 (C-1097), 16 août 1993 (1993-08-16) & JP 05 098169 A (KANEGAFUCHI CHEM IND CO LTD), 20 avril 1993 (1993-04-20)**

EP 1 608 706 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Le domaine de la présente invention concerne le domaine des batteries et des électrolytes polymères pour batteries et plus particulièrement le domaine des batteries au lithium.

Plus précisément, la présente invention a pour objet une nouvelle composition polymérisable et/ou réticulable pour électrolyte de batterie, un nouvel électrolyte polymère obtenu par polymérisation et/ou réticulation de cette nouvelle composition ainsi qu'une nouvelle batterie polymère.

Historiquement, les batteries au plomb ont été les plus couramment utilisées. Cependant, la technologie au plomb avait de nombreux inconvénients liés au poids des batteries, à la fragilité en cours de fonctionnement ainsi qu'à l'utilisation d'un liquide corrosif. Ceci à conduit au développement de batteries alcalines dont les électrodes étaient soit à base de nickel et de cadmium (batteries nickel-cadmium), soit à base d'oxyde de nickel et de zinc (batteries zinc-nickel), soit à base d'oxyde d'argent couplé à du zinc, du cadmium ou du fer (batteries à l'oxyde d'argent). Toutes ces technologies utilisent une solution de potasse comme électrolyte et présentent comme inconvénient majeur une densité d'énergie massique faible au regard des besoins liés au développement des équipements portables. C'est ainsi que les fabricants ont développés une nouvelle filière basée sur des batteries au lithium utilisant une électrode négative à base de lithium métallique (d'où l'appellation batterie « lithium-métal »). Cependant, les problèmes liés à une mauvaise reconstitution de l'électrode négative de lithium au cours des charges successives a vite débouchés sur un nouveau type d'électrode négative à base de carbone, utilisé comme composé d'insertion du lithium (d'où l'appellation batterie « lithium-ion ».

Pour les batteries au lithium, le principe de fonctionnement se résume de la manière suivante :

> Au cours de la charge électrochimique, les ions de métal de transition du matériau d'électrode positive sont oxydés, ce qui induit la désintercalation du lithium. La circulation des électrons est imposée dans le circuit extérieur et une quantité équivalente molaire d'ions lithium traversent l'électrolyte qui est un conducteur ionique et isolant électronique. Ceci permet l'intercalation du lithium à l'électrode négative. Lors de la décharge de la batterie, c'est-à-dire en cours d'utilisation, c'est le phénomène inverse qui s'opère spontanément.

Dans les batteries, le conducteur ionique ou électrolyte, qui sépare les électrodes, est un élément clé. D'une part, son état, liquide, solide ou gélifié affecte la sûreté du système et d'autre part, sa conductivité détermine la gamme de température de fonctionnement. Des électrolytes liquides à base de carbonates sont couramment utilisés. Cependant, ils ne présentent pas les conditions optimums de sécurité liées à la manipulation d'un liquide corrosif. En effet, ce type de batterie peut-être le siège d'incidents tels qu'un emballement thermique conduisant à la formation de gaz, augmentant ainsi la pression interne de la batterie et le risque d'explosion. C'est pour cette raison que des normes strictes de sécurité imposent aux fabricants l'usage de boîtiers sophistiqués, augmentant ainsi le prix de revient d'une unité.

Afin de palier à cet inconvénient majeur, l'industrie des batteries a développé une nouvelle technologie basée sur des électrolytes polymères solides à anode de lithium, d'où l'appellation de « batterie lithium-polymère ». Du fait de son caractère solide et sous forme de film, ce nouveau type d'électrolyte permet le développement de batterie plus sûre et ayant une grande variété de formes. La faible épaisseur des films constitués permet une augmentation du rendement énergétique à faible densité de courant. L'un des premiers « polymères secs » étudié a été le polyoxyéthylène pour des applications de transport. Cependant, l'un des inconvénients majeurs de ce type de polymère est lié aux faibles niveaux de conductivités de ce type de polymère pour une utilisation à température ambiante et à fortiori aux basses températures. L'industrie des batteries est donc à la recherche de nouveaux électrolytes polymères ayant des niveaux de conductivité suffisante pour une utilisation dans une gamme de température adaptée allant de -20° à +80°C.

Les professionnels concernés ont donc cherché à mettre au point de nouveaux électrolytes polymères. A titre illustratif, la demande international WO2000/25323 décrit une composition réticulable pour former un électrolytes polymère de batterie comprenant un polyorganosiloxane (POS) constitué de groupements polyoxyéthylènes ou de groupements carbonates cycliques ayant au moins deux SiH réactifs, un réticulant POS ayant au moins deux groupements réactifs de type alcényle (SiVi), un catalyseur d'hydrosilylation et un sel électrolyte. Cette composition est réticulée thermiquement par chauffage entre 70 et 100°C pendant une durée d'environ 6 heures pour obtenir un polymère électrolyte. Cette référence ne présente pas de composition comprenant un POS fonctionnalisé à la fois par des groupements polyéthers et vinyliques réticulé par un POS à fonction SiH en présence d'un catalyseur d'hydrosilylation et d'un sel électrolyte. Cette variante technologique est souhaitable pour l'industrie du domaine considéré car elle ouvre la voie à de nouveaux électrolytes polymères.

En effet, l'industrie du domaine considérée est dans l'attente de nouvelles compositions pour électrolyte de batterie permettant d'obtenir des polymères électrolytes ayant des niveaux suffisants de conductivité pour une utilisation dans une gamme de température adaptée allant de -20° à +80°C.

L'objectif principal de la présente invention est donc de proposer une nouvelle composition polymérisable et/ou réticulable pour électrolyte polymère de batterie permettant d'obtenir des polymères électrolytes ayant des niveaux

suffisants de conductivité pour une utilisation dans une gamme de température adaptée allant de -20° à +80°C.

L'invention vise également l'obtention d'un électrolyte polymère solide par polymérisation et/ou réticulation de la composition selon l'invention.

L'invention a aussi pour but de fournir une batterie polymère et plus particulièrement une batterie lithium polymère.

Ces objectifs parmi d'autres sont atteints par la présente invention qui concerne une composition polymérisable et/ou réticulable par polyaddition pour électrolyte de batterie comprenant :

a) au moins un polyorganosiloxane (POS) (A) présentant, par molécule, au moins deux groupements alcényles, en C2-C6 liés au silicium et au moins un groupement directement lié à un atome de silicium comprenant une fonction éther de polyoxyalkylène (Poa) ;
b) au moins un polyorganosiloxane (POS) (B) présentant, par molécule, au moins deux atomes d'hydrogène liés au silicium ;
c) une quantité catalytiquement efficace d'au moins un catalyseur d'hydrosilylation (C) ; et
d) au moins un sel électrolyte (D).

le POS (A) est un copolymère essentiellement linéaire statistique, séquencé ou à bloc, de formule générale moyenne (II) suivante :

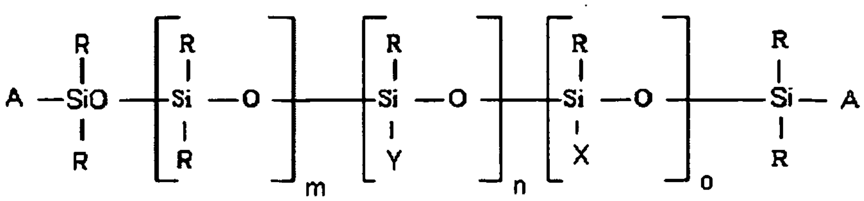

et pouvant comporter des motifs de formule $RSiO_{3/2}$ (T) (le % de motifs T maximum sera déterminé de manière à ce que la composition reste sous une forme liquide),
formule dans laquelle :

- les symboles R, identiques ou différents, représentent chacun un groupe hydrocarboné monovalent choisi parmi un radical alkyle, linéaire ou ramifié, ayant de 1 à 6 atomes de carbones, un radical cycloalkyle ayant de 5 à 8 atomes de carbone, un radical alkoxyle et un radical phényle ;
- les symboles Y, identiques ou différents, représentent chacun un groupement $R^1$-Poa où le symbole $R^1$ représente un radical comprenant de 2 à 50 atomes de carbone et le symbole Poa représente un groupement de type éther de polyoxyalkylène, de préférence éther de polyoxyéthylène et/ou éther de polyoxypropylène ;
- les symboles X, identiques ou différents, représentent chacun une fonction alcényles, en C2-C6 liés au silicium, de préférence vinyle ou allyle ;
- les symboles A, identiques ou différents, représentent chacun un symbole R, un symbole X ou un symbole Y, lesdits symboles ont les mêmes définitions que ci-dessus ;
- m est un nombre entier ou fractionnaire supérieur ou égal à 0 ;
- n est un nombre entier ou fractionnaire supérieur ou égal à 1 ; et
- o est un nombre entier ou fractionnaire supérieur ou égal à 2.

L'expression « composition polymérisable et/ou réticulable» signifie que la composition selon l'invention a une aptitude à polymériser et/ou réticuler à température ambiante ou à la chaleur par des réactions de polyaddition, essentiellement par réaction de groupements hydrogéno-silylés (SiH) sur des groupements alkényl-silylés. La réaction d'hydrosilylation entre ces motifs réactifs silicones conduit à la formation de liaisons ≡Si-O-Si≡ conduisant à la formation de réseaux.

Par quantité efficace d'au moins un catalyseur d'hydrosilylation (C), on entend, au sens de l'invention, la quantité suffisante pour amorcer la polymérisation et/ou réticulation. Cette quantité doit être la plus faible possible afin de permettre une meilleure conservation dans le temps de la composition. Tout catalyseur susceptible d'initier une réaction de polyaddition pourra convenir. Par exemple, on peut citer les catalyseurs à base de platine, de ruthénium ou de rhodium. Les catalyseurs à base de platine sont particulièrement adaptés à ce type de réaction et sont décrits dans les brevets US 2 823 218, US 2 970 150, US 3 775 452, FR 2825709 et FR 2801887.

Classiquement, les réactions d'hydrosilylation permettant aux silicones de réticuler sont catalysées par des catalyseurs au platine (voir par exemple les brevets US 2 823 218, US 2 970 150). En pratique, la plupart des réactions

industrielles d'hydrosilylation sont catalysées par la solution de Karstedt qui est constituée par des complexes de platine au degré d'oxydation 0. La formule générale du complexe de Karstedt est $Pt_2$(tétraméthyldivinylsiloxane)$_3$. Ce catalyseur usuel et son obtention sont décrits dans le brevet US 3 775 452. D'autres catalyseurs utilisés selon l'invention sont à base de complexes de platine et sont décrit dans les demandes de brevet FR 2825709 et FR 2801887.

D'une manière préférée, les proportions des POS (A) et POS (B) sont telles que le rapport du nombre des atomes d'hydrogène liés au silicium dans le POS (B) sur le nombre de radicaux alcényles apportés par le POS (A) est compris entre 0,4 et 10.

Selon un mode particulier de l'invention, la fonction éther de polyoxyalkylène (Poa) du (POS) (A) est de type éther de polyoxyéthylène et/ou éther de polyoxypropylène.

De manière avantageuse :

- m est un nombre entier ou fractionnaire supérieur ou égal à 0 et inférieur ou égal à 200, de préférence compris entre 10 et 100 et encore plus préférentiellement compris entre 20 et 40;
- n est un nombre entier ou fractionnaire supérieur ou égal à 1 et inférieur ou égal à 200 ; de préférence compris entre 10 et 100 et encore plus préférentiellement compris entre 20 et 40 ; et
- o est un nombre entier ou fractionnaire supérieur ou égal à 2 et inférieur ou égale à 200, de préférence compris entre 5 et 50 et encore plus préférentiellement compris entre 5 et 20.

Selon un mode particulier de l'invention, le nombre de motif portant la fonction alcényle X est choisi de manière à ce que les fonctions alcényles X représentent une teneur exprimée en % par rapport au poids total du POS (A) comprise entre 0,5 et 5 %.

Les groupements (-$R^1$-Poa) sont avantageusement choisis parmi les groupements suivants:

$-(CH_2)_3-O-(CH_2CH_2-O)_m-CH_3$ $-(CH_2)_2-O-(CH_2CH_2-O)_m-CH_3$ ;
$-(CH_2)_3-O-(CH(CH_3)-CH_2-O)_m-CH_3$ et $-(CH_2)_2-O-(CH(CH_3)-CH_2-O)_m-CH_3$
avec $m \leq 14$, de préférence compris entre 5 et 14 et encore plus préférentiellement égal à 6.

D'autres compositions polymérisables et/ou réticulables par polyaddition pour électrolyte de batterie préférées dans le cadre de la présente invention sont encore celles dont le POS (B) comprend:

a) au moins deux motifs semblables ou différents de formule (III)

$$R_x H SiO_{\frac{4-x}{2}} \qquad (III)$$

formule dans laquelle :

- les symboles R, identiques ou différents, représentent chacun un hydrogène, un groupe hydrocarboné monovalent choisi parmi un radical alkyle, linéaire ou ramifié, ayant de 1 à 6 atomes de carbones, un radical cycloalkyle ayant de 5 à 8 atomes de carbone, et un radical phényle ;et
- x est un nombre compris entre 1 et 3 inclus ; et

b) éventuellement au moins un motif siloxyle de formule $R_kSiO_{(4-k)/2}$, le symbole R ayant la même définition que ci-dessus et k est un nombre compris entre 1 et 3.

De manière avantageuse, le POS (B) est un copolymère essentiellement linéaire statistique, séquencé ou à bloc, de formule générale moyenne (IV) suivante :

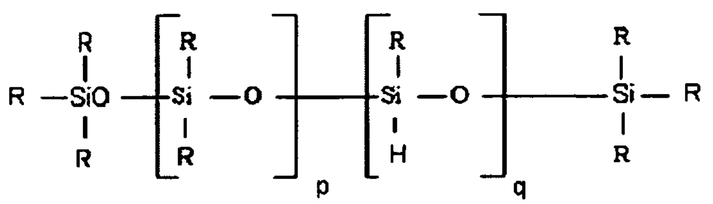

formule dans laquelle :

- les symboles R, identiques ou différents, représentent chacun un hydrogène, un groupe hydrocarboné monovalent choisi parmi un radical alkyle, linéaire ou ramifié, ayant de 1 à 6 atomes de carbones, un radical cycloalkyle ayant de 5 à 8 atomes de carbone, et un radical phényle ;
- p est un nombre entier ou fractionnaire supérieur ou égal à 0, de préférence compris entre 0 et 200; et encore plus préférentiellement compris entre 0 et 50 ; et
- q est un nombre entier ou fractionnaire supérieur ou égal à 2 et pouvant éventuellement être égal à 0, de préférence compris entre 0 et 200 et encore plus préférentiellement compris entre 0 et 50 ; avec comme condition que lorsque q=0 alors les deux groupements M terminaux sont porteurs d'un hydrogène directement lié à l'atome de silicium.

Selon une caractéristique remarquable de l'invention, le sel électrolyte (D) est constitué :

- d'un cation choisi parmi le groupe constitué par les entités suivantes : les cations métalliques, les ions ammoniums, les ions amidiniums et les ions guanidiums ; et
- d'un anion choisi parmi le groupe constitué par les entités suivantes : les ions chlorures, les ions bromures, les ions iodures, les ions perchlorates, les ions thyocyanates, les ions tétrafluoroborates, les ions nitrates, $AsF6^-$, $PF6^-$, les ions stéarylsulfonates, les ions trifluorométhanesulfonates, les ions octylsulfonates, les ions dodécylbenzène-sulfonates, $R^4SO_3^-$, $(R^4SO_2)$ $(R^5SO_2)N^-$ et $(R^4SO_2)$ $(R^5SO_2)$ $(R^6SO_2)C^-$, dans chaque formule les radicaux $R^4$, $R^5$ et $R^6$ sont identiques ou différents et représentent des groupements électro-attracteurs.

D'une manière avantageuse, les radicaux $R^4$, $R^5$ et $R^6$ sont choisis parmi des groupements électro-attracteurs de type perfluoroaryle ou perfluoroalkyle comprenant de 1 à 6 atomes de carbone.

Selon une variante de l'invention, le sel électrolyte (D) comprend un cation métallique choisi parmi les métaux alcalins et alcalino-terreux des groupes 1 et 2 de la classification périodique [Chem. & Eng. News, vol 63, n°5, 26 du 4 Février 1985]. En particulier, le cation métallique est soit de type lithium soit choisi parmi les métaux de transition, par exemple le manganèse, le fer, le cobalt, le nickel, le cuivre, le zinc, le calcium, le manganèse ou l'argent . Les sels électrolytes de type lithium utiles selon l'invention peuvent être choisis parmi le groupe constitué par les composés suivants :

$LiClO_4$, $LiBF_4$, $LiPF_6$, $LiAsF_6$, $LiCF_3SO_3$, $LiN(CF_3SO_2)_2$, $Li(C_2F_5SO_2)_2$ et un mélange de ces composés.

D'une manière préférentielle, la quantité de sel électrolyte de lithium de la composition est définie de façon à ce que le ratio molaire O/Li soit compris entre 15 et 40, préférentiellement entre 10 et 30 et encore plus préférentiellement compris entre 20 et 25.

Bien que l'électrolyte selon l'invention soit un polymère solide après réticulation et/ou polymérisation, l'enseignement de l'invention ne se limite pas au seul solide. En effet, on peut adjoindre à la composition un électrolyte organique (E) afin d'obtenir après réticulation et/ou polymérisation une forme liquide ou gélifiée. Le choix se portera de préférence sur les composés choisis parmi le groupe constitué du carbonate de propylène, carbonate d'éthylène, carbonate de diéthyle, carbonate de diméthyle, carbonate d'éthylméthyle, $\gamma$-butyrolactone, 1,3-dioxolane, diméthoxyéthane, tétrahydrofurane, diméthyl sulfoxide et polyéthylène glycol diméthyléther.

L'invention concerne également un électrolyte polymère pour batterie obtenu par polymérisation et/ou réticulation par voie de polyaddition (réaction d'hydrosilylation) de la composition polymérisable et/ou réticulable selon l'invention décrite ci-dessus. Ladite polyaddition peut être éventuellement initiée par thermoactivation du catalyseur (C). Suivant le type de catalyseur utilisé pour initier la réaction, il peut être nécessaire de chauffer le milieu réactionnel à des températures supérieures à 65°C. On utilisera de préférence des températures comprises entre 70 et 130°C. Le catalyseur (C) peut être mis en oeuvre tel quel ou en solution dans un solvant. De façon générale, il suffit d'introduire dans le milieu réactionnel moins de 1000 ppm, de préférence moins de 100 ppm, mieux encore moins de 50 ppm de catalyseur (C) à base de platine calculé par rapport à la masse totale du composé insaturé et du composé à motifs Si-H.

Les solvants utilisables pour les catalyseurs sont très nombreux et variés et sont choisis selon le catalyseur utilisé et les autres constituants de la composition ainsi préparée. En général, les solvants peuvent être les hydrocarbures aliphatiques (tels que pentane, hexane, heptane, pentaméthylheptane ou les fractions de distillation du pétrole); les hydrocarbures aromatiques (tels que le benzène le toluène et les xylènes : ortho-xylène para-xylène et méta-xylène) ; les hydrocarbures aliphatiques ou aromatiques halogénés (tels que tétrachloroéthylène) ; ou les éthers (tels que le tétrahydrofuranne ou le dioxanne).

Généralement, le rapport molaire des insaturations aux liaisons Si-H varie entre 1:100 et 10:1. La durée de réaction requise varie en fonction du type de catalyseur et la température utilisée pour la réaction.

La composition selon l'invention peut aussi comprendre des agents de renfort afin d'améliorer les propriétés

mécaniques de l'électrolyte polymère obtenu après polymérisation et/ou réticulation. Par exemple, la composition selon l'invention pourra éventuellement comprendre de la silice traitée, de l'alumine traitée ou des résines polyorganosiloxanes.

Un autre objet de l'invention est une batterie comprenant l'électrolyte polymère obtenu par polymérisation et/ou réticulation décrit ci-dessus, placé entre une anode et une cathode. D'une manière avantageuse, au moins un des constituants de la cathode est choisi parmi le groupe constitué des entités suivantes :

lithium métallique, alliages de lithium, matériaux inorganiques comprenant des insertions de lithium et matériaux carbonatés comprenant des insertions de lithium.

L'application de ces batteries est particulièrement adaptée pour les domaines de stockage de l'électricité suivants : les alimentations de secours pour les systèmes industriels et de télécommunication, les alimentations secondaires des équipements portables, les batteries pour applications satellites géostationnaires et les batteries pour véhicule électrique et hybride.

Les exemples suivants sont donnés à titre illustratif et ils ne peuvent être considérés comme une limite de la portée de l'invention.

EXEMPLES

Exemple 1 : Préparation d'organohydrogénopolysiloxanes de type POS (A)

a) Préparation de l'organohydrogénopolysiloxane POS (A1)

Dans un réacteur pentacol de 1 litre muni d'un réfrigérant, d'une agitation mécanique, d'une sonde thermomètre et sous ciel d'argon, on introduit :

- 247.5 g (3.91 moles de SiH) d'une huile à motif SiH de structure suivante (V) :

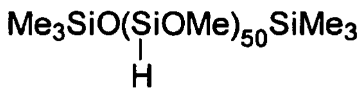

- 289.65 g (0.978 moles) d'octaméthyltétracyclosiloxane ($D_4$) ; et
- 12.65 g d'une huile hexaméthyldisiloxane de formule (VI) suivante :

$$Me_3SiOSiMe_3$$

On rajoute ensuite 2.8 g (soit 0.5 % en poids de la masse réactionnelle) d'un catalyseur à base d'acide chlorhydrique sur support (Tonsil). La masse réactionnelle est portée à 80°C et on laisse la réaction se poursuivre pendant 7 heures.
La détermination de l'extrait sec permet de suivre l'évolution de la réaction.

| durée | Taux de volatils (1 g, 150°C, 30') |
|---|---|
| 5' | 40.05 |
| 2 h30 | 82.3 |
| 7 h | 87.9 |
| 7 h 30 | 87.9 |

La stabilité de l'extrait sec indique que l'équilibre est atteint et que la réaction est terminée. La masse réactionnelle est ensuite filtrée sous pression pour éliminer le catalyseur. On recueille ainsi 543.2 g d'une huile limpide incolore. La masse réactionnelle est ensuite chauffée à 170°C puis mise sous vide pour éliminer les volatils (5 mbars pendant 5 heures). On obtient finalement 457.6 g d'une huile limpide et incolore titrant 7.06 moles de motifs SiH /Kg. L'analyse RMN $^1H$ et $^{29}Si$ confirmant la structure (VII) suivante:

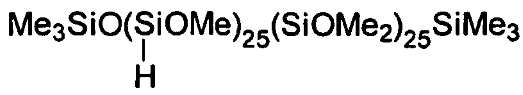

Puis, dans un réacteur pentacol de 1 litre muni d'un réfrigérant, d'une ampoule de coulée, d'une agitation mécanique, d'une sonde thermomètre et sous ciel d'argon, on introduit 388.6 g (0.916 moles de motifs allyle) d'allylpolyéther de référence MA 300 (par la société NOF) et 48.8 mg de catalyseur de Karstedt titrant 10 % en poids de platine. Le milieu réactionnel est porté à 90°C et mis sous agitation. Puis, on coule en 3 h30 sur le milieu réactionnel 100 g de l'huile à fonction SiH (VII) (0,706 mole de fonction SiH). En fin de coulée le taux de transformation des motifs SiH dosés par gazométrie est de 98.5 %. Au bout de 23 h le taux de transformation est de 100% et la masse réactionnelle est refroidie. On recueille ainsi 470.1 g d'un mélange de viscosité égale à 227.3 cps à 25°C composé de l'huile intermédiaire POS (A-i) de structure suivante (VIII) :

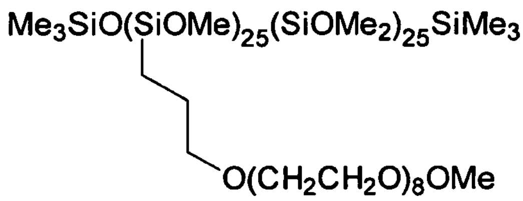

et de l'excès de polyéther sous forme libre ou isomérisé.

Puis, dans un réacteur pentacol de 1 litre muni d'un réfrigérant, d'une ampoule de coulée, d'une agitation mécanique, d'une sonde thermomètre et sous ciel d'argon, on introduit 470.1 g de cette huile POS (A-i) et 71 g (0.167moles) de tétraméthyltétravinylcyclotétrasiloxane de formule (IX) suivante :

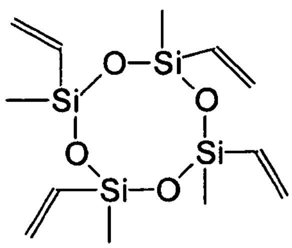

On rajoute ensuite 2.76 g (soit 0.5 % en poids de la masse réactionnelle) d'un catalyseur à base d'acide chlorhydrique sur support (Tonsil). La masse réactionnelle est portée à 80°C et on laisse la réaction se poursuivre pendant 5 jours. L'évolution de la viscosité permet de suivre le déroulement de la réaction.

| durée | Nature | Viscosité (cps à 25°C) |
|---|---|---|
| Initial | huile polyéther seule | 227.3 |
| Initial | mélange réactionnel | 154.4 |
| 29 h | mélange réactionnel | 214.8 |
| 30 h | mélange réactionnel | 207.9 |
| 120 h | mélange réactionnel | 208.9 |

La stabilité de la viscosité indique l'atteinte de l'équilibre. La masse réactionnelle est ensuite filtrée sous pression pour éliminer le catalyseur. On recueille ainsi 422.9 g d'une huile de couleur brun foncé. La masse réactionnelle est ensuite dévolatilisée afin d'éliminer les volatils résultants de la réaction de redistribution (130°C sous 3 mbars pendant 5 heures puis à 160°C sous 3 mbars pendant 5 heures). On recueille après refroidissement 359.6 g d'une huile de couleur brun foncé. Le dosage des fonctions vinyliques par éthoxylation indique une teneur de 1.9 % poids (exprimé en masse 27 g) de fonctions vinyles. Les analyses RMN $^{1}H$ et $^{29}Si$ confirment la structure finale POS (A1) :

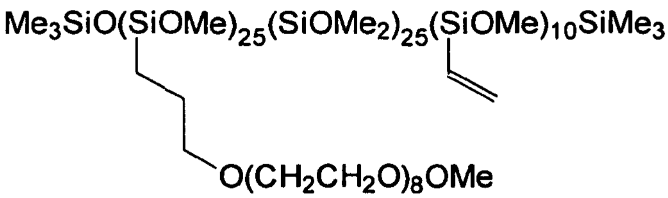

b) Préparation de l'organohydrogénopolysiloxane POS (A2) - schéma réactionnel :

1ère étape

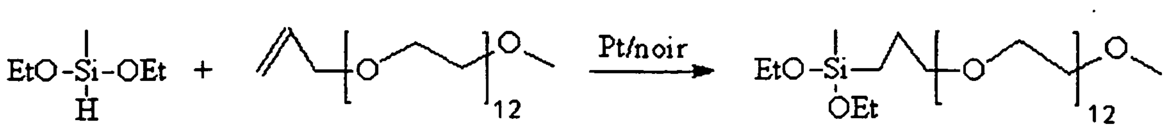


2éme étape

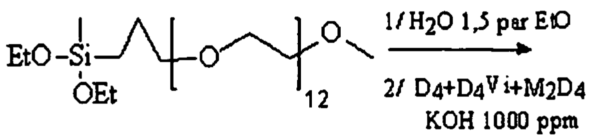


$M\text{-}D^{Vi}_m\text{-}D_n\text{-}D^R_p\text{-}T(OH)_q\text{-}T_r\text{-}M$

avec $R = (CH_2)_3\text{-}(O\text{-}CH_2\text{-}CH_2)_x\text{-}OCH_3$

POS (A2)

Mode opératoire 1e étape

Dans un réacteur de 1 L muni d'une agitation de type impeller, d'un réfrigérant suivi d'un bulleur et d'une contre pâle (contenant la sonde de température), sont ajoutés dans le réacteur 150g de xylène et 1,2 g de Platine sur noir (soit 100 ppm par rapport à la masse réactionnelle). Le milieu réactionnel est ensuite porté à 80°C.
Une co-coulée du silane préalablement distillé (81,8g mole) et de l'allyloxypolyéther (218,2 g) est alors réalisée en 2 heures à l'aide de pompe péristaltiques. Cette réaction est effectuée à environ 80°C sous ciel d'azote et sous agitation mécanique. La réaction est terminée lorsque le taux de transformation des SiH souhaité (80%) est atteint, le chauffage et l'agitation sont alors arrêtés.
Une filtration est alors réalisée dans un filtre en aluminium équipé d'une membrane en cellulose recouverte de terre diatomée sous pression d'azote. Puis la distillation des volatils est effectuée sous pression réduite (environ 5 mBars) et à 150°C. On obtient 217,3 g de produit.

Mode opératoire 2e étape

Motifs : $M = (CH_3)_3SiO_{1/2}$; $D = (CH_3)_2SiO_{2/2}$, $D^{Vi} = (CH_3)Si(vinyl)O_{2/2}$, $D(OR) = (Me_2)Si(OR)O_{1/2}$

Dans un tricol de 500 mL muni d'une agitation mécanique et d'une colonne de distillation, on introduit dans le réacteur 208,4g du silane fonctionnalisé par la fonction éther de polyoxyéthylène, obtenu au cours de la 1ère étape, et 10,3g d'eau déminéralisée. L'éthanol ainsi formé est aussitôt distillé. Une fois l'hydrolyse terminée, on procède à la redistribution en ajoutant 26,7g d'octaméthylcyclotétrasiloxane ($D_4$), 8,8g d'une huile $MD_4M$, 48,9g de tétraméthyltétra-vinylcyclotétrasiloxane ($D_4^{Vi}$) et 0,32g de potasse sous forme solide (soit 1000 ppm).
Le milieu réactionnel est alors porté à 100°C pendant 24 heures sous ciel d'argon. Le produit est alors neutralisé par 1,9g d'ester silylé d'acide phosphorique à 15% pendant 1 heure. Une élimination des volatils est ensuite effectuée sous

pression réduite de 5mbar et à 100°C. On obtient 258,4 g de produit POS (A2) présentant les répartitions en masse suivantes :

| | |
|---|---|
| Mn pst | 1310 |
| Mw pst | 2900 |

La structure du produit est caractérisée en RMN :

$$M\text{-}D^{Vi}{}_m\text{-}D_n\text{-}D^R{}_p\text{-}T(OH)_q\text{-}T_r\text{-}M$$

avec R = $(CH_2)_3$-$(O\text{-}CH_2\text{-}CH_2)_x$-$OCH_3$ (les bouts de chaînes sont à 60% M et à 40% D(OR)).

| | m | n | p | q | r | x |
|---|---|---|---|---|---|---|
| POS (A2) | 20 | 16,2 | 10,4 | 0 | 0 | 12 |

Exemple 2 : préparation des électrolytes Polymères E1 et E2:

$$M' = (CH_3)_2HSiO_{1/2}$$

On prépare les compositions selon l'invention en mélangeant au moyen d'une turbine:

a) une quantité variable d'un POS (A) préparé selon l'exemple 1,
b) une quantité variable de sel LiTFSi (LiTFSI = lithium bistrifluorométhanesulfonamide),
c) une quantité variable d'une huile M'M' POS (B) de manière à avoir un ratio H/vinyl = 1, et
d) 100 ppm de platine de Karstedt.

La réticulation est effectuée par activation thermique Lorsque la réaction est complète, on refroidit et on récupère les électrolytes polymères solides E1 et E2 sous forme de film.

Exemple 3 : Mesure de la conductivité ionique des l'électrolyte E1 et E2.

Les mesures de conductivité ionique des électrolytes E1 et E2 réticulés selon l'exemple 2 ainsi que leurs évolutions avec la température ont été réalisées via l'utilisation de la technique de spectrométrie d'impédance complexe, technique permettant de déterminer les grandeurs caractéristiques de systèmes conducteurs telles leur résistance ou leur capacité.
Le film d'électrolyte solide est inséré et maintenu fixe entre deux électrodes en acier inox, le tout constituant la cellule de mesure principale. Ce dispositif expérimental est positionné à l'intérieur d'une étuve permettant un balayage en températures compris entre -20 et +80°C. La cellule est reliée à un impédancemètre Hewlett Packard HD4192A couplé à un ordinateur pour l'enregistrement des données. La cellule est soumise à une tension sinusoïdale de 100 mV crête à crête dans un domaine de fréquences allant de $5.10^{-3}$ Hz à 13 MHz. Pour chaque échantillon, la mesure est réalisée après ¾ d'heure de maintien à la température de consigne
Dans ces conditions, les conductivités ioniques des électrolytes E1 et E2 à 25°C, telles que mesurées par la méthode d'impédance complexe sont comprises entre $10^{-4}$ et $5x10^{-6}$ Siemens/cm.

## Revendications

**1.** Composition polymérisable et/ou réticulable par polyaddition pour électrolyte de batterie comprenant :

a) au moins un polyorganosiloxane (POS) (A) présentant, par molécule, au moins deux groupes alcényles, en C2-C6 liés au silicium et au moins un groupement directement lié à un atome de silicium comprenant une fonction éther de polyoxyalkylène (Poa) ;
b) au moins un polyorganosiloxane (POS) (B) présentant, par molécule, au moins deux atomes d'hydrogène

liés au silicium ;

c) une quantité catalytiquement efficace d'au moins un catalyseur d'hydrosilylation (C) ; et

d) au moins un sel électrolyte (D) ;

le POS (A) est un copolymère linéaire statistique, séquencé ou à bloc, de formule générale moyenne (II) suivante :

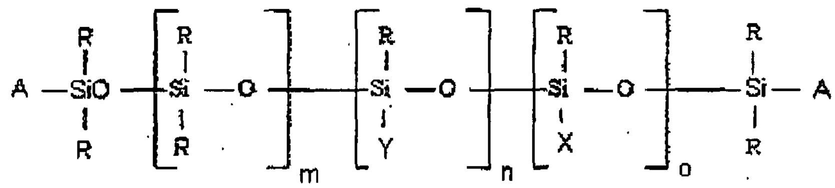

et pouvant éventuellement comporter des motifs de formule $RSiO_{3/2}$ (T) formule dans laquelle:

- les symboles R, identiques ou différents, représentent chacun un groupe hydrocarboné monovalent choisi parmi un radical alkyle, linéaire ou ramifié, ayant de 1 à 6 atomes de carbones, un radical cycloalkyle ayant de 5 à 8 atomes de carbone, un radical alkoxyle et un radical phényle;
- les symboles Y, identiques ou différents, représentent chacun un groupement $R^1$-Poa où le symbole $R^1$ représente un radical comprenant de 2 à 50 atomes de carbone et le symbole Poa représente un groupement de type éther de polyoxyalkylène, de préférence éther de polyoxyéthylène et/ou éther de polyoxypropylène ;
- les symboles X, identiques ou différents, représentent chacun une fonction alcényles, en C2-C6 liés au silicium, de préférence vinyle ou allyle ;
- les symboles A, identiques ou différents, représentent chacun un symbole R, un symbole X ou un symbole Y, lesdits symboles ont les mêmes définitions que ci-dessus ;
- m est un nombre entier ou fractionnaire supérieur ou égal à 0 ;
- n est un nombre entier ou fractionnaire supérieur ou égal à 1 ; et
- o est un nombre entier ou fractionnaire supérieur ou égal à 2.

**2.** Composition polymérisable et/ou réticulable par polyaddition pour électrolyte de batterie selon la revendication 1 **caractérisée en ce que** les proportions des POS (A) et POS (B) sont telles que le rapport du nombre des atomes d'hydrogène liés au silicium dans le POS (B) sur le nombre de radicaux alcényles apportés par le POS (A) est compris entre 0,4 et 10.

**3.** Composition polymérisable et/ou réticulable par polyaddition pour électrolyte de batterie selon l'une des revendications précédentes **caractérisée en ce que** la fonction éther de polyoxyalkylène (Poa) du (POS) (A) est de type éther de polyoxyéthylène et/ou éther de polyoxypropylène.

**4.** Composition polymérisable et/ou réticulable par polyaddition pour électrolyte de batterie selon la revendication 1 **caractérisée en ce que** les groupements (-R'-Poa) sont choisis parmi les groupements suivants :

$-(CH_2)_3-O-(CH_2CH_2-O)_m-CH_3$ ; $-(CH_2)_2-O-(CH_2CH_2-O)_m-CH_3$ ; $-(CH_2)_3-O-(CH(CH_3)-CH_2-O)_m-CH_3$ et $-(CH_2)_2-O-(CH(CH_3)-CH_2-O)_m-CH_3$
avec $m \leq 14$.

**5.** Composition polymérisable et/ou réticulable par polyaddition pour électrolyte de batterie selon la revendication 1 **caractérisée en ce que** :

- m est un nombre entier ou fractionnaire supérieur ou égal à 0 et inférieur ou égale à 200 ;
- n est un nombre entier ou fractionnaire supérieur ou égal à 1 et inférieur ou égale à 200 ; et
- o est un nombre entier ou fractionnaire supérieur ou égal à 2 et inférieur ou égale à 200.

**6.** Composition polymérisable et/ou réticulable par polyaddition pour électrolyte de batterie selon la revendication 1 **caractérisée en ce que** le nombre de motif portant la fonction alcényle X est choisi de manière à ce que les fonctions alcényles X représentent une teneur exprimée en % par rapport au poids total du POS (A) comprise entre 0,5 et 5 %.

**7.** Composition polymérisable et/ou réticulable par polyaddition pour électrolyte de batterie selon l'une des revendications 1 à 6 **caractérisée en ce que** le POS (B) comprend:

a) au moins deux motifs semblables ou différents de formule (III)

$$R_x H SiO_{\frac{4-x}{2}} \qquad (III)$$

formule dans laquelle :

- les symboles R, identiques ou différents, représentent chacun un groupe hydrocarboné monovalent choisi parmi un radical alkyle, linéaire ou ramifié, ayant de 1 à 6 atomes de carbones, un radical cycloalkyle ayant de 5 à 8 atomes de carbone, et un radical phényle ;et
- x est un nombre compris entre 1 et 3 inclus ; et

b) éventuellement au moins un motif siloxyle de formule $R_kSiO_{(4-k)/2}$, le symbole R ayant la même définition que ci-dessus et k est un nombre compris entre 1 et 3.

**8.** Composition polymérisable et/ou réticulable par polyaddition pour électrolyte de batterie selon les revendications 1 à 7 **caractérisée en ce que** le POS (B) est un copolymère essentiellement linéaire statistique, séquencé ou à bloc, de formule générale moyenne (IV) suivante :

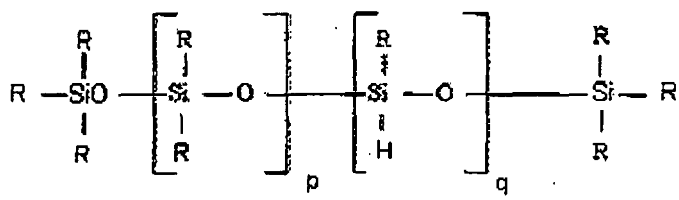

formule dans laquelle :

- les symboles R, identiques ou différents, représentent chacun un hydrogène, un groupe hydrocarboné monovalent choisi parmi un radical alkyle, linéaire ou ramifié, ayant de 1 à 6 atomes de carbones, un radical cycloalkyle ayant de 5 à 8 atomes de carbone, et un radical phényle ;
- p est un nombre entier ou fractionnaire supérieur ou égal à 0 ; et
- q est un nombre entier ou fractionnaire supérieur ou égal à 2 et pouvant éventuellement être égal à 0, avec comme condition que lorsque q=0 alors les deux groupements M terminaux sont porteurs d'un hydrogène directement lié à l'atome de silicium.

**9.** Composition polymérisable et/ou réticulable par polyaddition pour électrolyte de batterie selon l'une des revendications précédentes **caractérisée en ce que** le sel électrolyte (D) est constitué :

- d'un cation choisi parmi le groupe constitué par les entités suivantes : les cations métalliques, les ions ammoniums, les ions amidiniums et les ions guanidiums ; et
- d'un anion choisi parmi le groupe constitué par les entités suivantes : les ions chlorures, les ions bromures, les ions iodures, les ions perchlorates, les ions thyocyanates, les ions tétrafluoroborates, les ions nitrates, $AsF6^-$, $PF6^-$, les ions stéarylsulfonates, les ions trifluorométhanesulfonates, les ions octylsulfonates, les ions dodécylbenzènesulfonates, $R^4SO_3^-$, $(R^4SO_2)$ $(R^6SO_2)N^-$ et $(R^4SO_2)$ $(R^5SO_2)$ $(R^6SO_2)C^-$, dans chaque formule les radicaux $R^4$, $R^5$ et $R^6$ sont identiques ou différents et représentent des groupements électro-attracteurs.

**10.** Composition polymérisable et/ou réticulable par polyaddition pour électrolyte de batterie selon la revendication 9 **caractérisée en ce que** les radicaux $R^4$, $R^5$ et $R^6$ sont des groupement électro-attracteurs de type perfluoroaryle ou perfluoroalkyle comprenant de 1 à 6 atomes de carbone.

**11.** Composition polymérisable et/ou réticulable par polyaddition pour électrolyte de batterie selon la revendication 9 **caractérisée en ce que** le sel électrolyte (D) comprend un cation métallique choisi parmi les métaux alcalins et

alcalino-terreux des groupes 1 et 2 de la classification périodique [Chem. & Eng. News, vol 63, n°5, 26 du 4 Février 1985].

**12.** Composition polymérisable et/ou réticulable par polyaddition pour électrolyte de batterie selon la revendication 11 **caractérisée en ce que** le sel électrolyte (D) comprend un cation métallique de type lithium.

**13.** Composition polymérisable et/ou réticulable par polyaddition pour électrolyte de batterie selon la revendication 12 **caractérisée en ce que** la quantité du sel électrolyte (D) est déterminée de manière à ce que le ratio molaire O/Li soit compris entre 15 et 40 et de préférence égal à 25.

**14.** Composition polymérisable et/ou réticulable par polyaddition pour électrolyte de batterie selon l'une des revendications 1, 12 ou 13 **caractérisée en ce que** le sel électrolyte (D) est choisi parmi le groupe constitué par les composés suivants :

$LiClO_4$, $LiBF_4$, $LiPF_6$, $LiAsF_6$, $LiCF_3SO_3$, $LiN(CF_3SO_2)_2$, $Li(C_2F_5SO_2)_2$ et un mélange de ces composés.

**15.** Composition polymérisable et/ou réticulable par polyaddition pour électrolyte de batterie selon la revendication 11 **caractérisée en ce que** le cation métallique est choisi parmi les métaux de transition.

**16.** Composition polymérisable et/ou réticulable par polyaddition pour électrolyte de batterie selon la revendication 15 **caractérisée en ce que** le cation métallique est choisi parmi le groupe constitué du manganèse, fer, cobalt, nickel, cuivre, zinc, calcium, manganèse et argent.

**17.** Composition polymérisable et/ou réticulable par polyaddition pour électrolyte de batterie selon l'une des revendications précédentes **caractérisée en ce qu'**elle comprend un électrolyte organique (E).

**18.** Composition polymérisable et/ou réticulable par polyaddition pour électrolyte de batterie selon la revendication 17 **caractérisée en ce que** l'électrolyte organique (E) est choisi parmi le groupe constitué des composés suivants : carbonate de propylène, carbonate d'éthylène, carbonate de diéthyle, carbonate de diméthyle, carbonate d'éthylméthyle, γ-butyrolactone, 1,3-dioxolane, diméthoxyéthane, tétrahydrofurane, diméthyl sulfoxide et polyéthylèneglycol diméthyléther.

**19.** Composition polymérisable et/ou réticulable par polyaddition pour électrolyte de batterie selon l'une des revendications précédentes **caractérisée en ce que** le catalyseur d'hydrosilylation (C) est à base de platine.

## Claims

**1.** Composition which can be polymerized and/or crosslinked by polyaddition for a battery electrolyte comprising:

a) at least one polyorganosiloxane (POS) (A) exhibiting, per molecule, at least two $C_2$-$C_6$ alkenyl groups bonded to silicon and at least one group directly bonded to a silicon atom comprising a polyoxyalkylene (Poa) ether functional group;
b) at least one polyorganosiloxane (POS) (B) exhibiting, per molecule, at least two hydrogen atoms bonded to silicon;
c) a catalytically effective amount of at least one hydrosilylation catalyst (C); and
d) at least one electrolyte salt (D); the POS (A) is a linear random or block copolymer

with the following mean general formula (II):

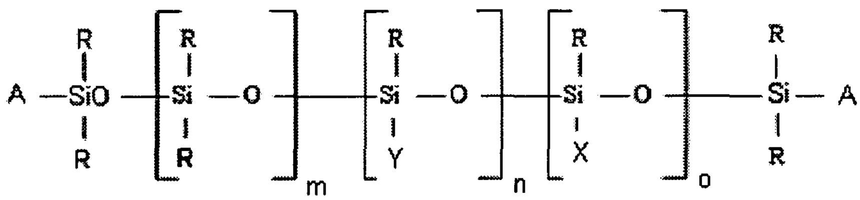

which can optionally comprise units of formula $RSiO_{3/2}$ (T), in which formula:

- the R symbols, which are identical or different, each represent a monovalent hydrocarbon group chosen from a linear or branched alkyl radical having from 1 to 6 carbon atoms, a cycloalkyl radical having from 5 to 8 carbon atoms, an alkoxyl radical and a phenyl radical;
- the Y symbols, which are identical or different, each represent an $R^1$-Poa group where the $R^1$ symbol represents a radical comprising from 2 to 50 carbon atoms and the Poa symbol represents a group of polyoxyalkylene ether type, preferably polyoxyethylene and/or polyoxypropylene ether type;
- the X symbols, which are identical or different, each represent a $C_2$-$C_6$ alkenyl functional group bonded to silicon, preferably vinyl or allyl;
- the A symbols, which are identical or different, each represent an R symbol, an X symbol or a Y symbol, the said symbols having the same definitions as above;
- m is an integer or fractional number greater than or equal to 0;
- n is an integer or fractional number greater than or equal to 1; and
- o is an integer or fractional number greater than or equal to 2.

**2.** Composition which can be polymerized and/or crosslinked by polyaddition for a battery electrolyte according to Claim 1, **characterized in that** the proportions of the POS (A) and of the POS (B) are such that the ratio of the number of the hydrogen atoms bonded to silicon in the POS (B) to the number of alkenyl radicals contributed by the POS (A) is between 0.4 and 10.

**3.** Composition which can be polymerized and/or crosslinked by polyaddition for a battery electrolyte according to either of the preceding claims, **characterized in that** the polyoxyalkylene (Poa) ether functional group of the (POS) (A) is of polyoxyethylene ether and/or polyoxypropylene ether type.

**4.** Composition which can be polymerized and/or crosslinked by polyaddition for a battery electrolyte according to Claim 1, **characterized in that** the -$R^1$-Poa groups are chosen from the following groups:

$-(CH_2)_3-O-(CH_2CH_2-O)_m-CH_3$; $-(CH_2)_2-O-(CH_2CH_2-O)_m-CH_3$; $-(CH_2)_3-O-(CH(CH_3-CH_2-O)_m-CH_3$ and $-(CH_2)_2-O-(CH(CH_3)-CH_2-O)_m-CH_3$
with $m \leq 14$.

**5.** Composition which can be polymerized and/or crosslinked by polyaddition for a battery electrolyte according to Claim 1, **characterized in that**:

- m is an integer or fractional number greater than or equal to 0 and less than or equal to 200;
- n is an integer or fractional number greater than or equal to 1 and less than or equal to 200; and
- o is an integer or fractional number greater than or equal to 2 and less than or equal to 200.

**6.** Composition which can be polymerized and/or crosslinked by polyaddition for a battery electrolyte according to Claim 1, **characterized in that** the number of units carrying the alkenyl functional group X is chosen so that the alkenyl functional groups X represent a content, expressed as % with respect to the total weight of the POS (A), of between 0.5 and 5%.

**7.** Composition which can be polymerized and/or crosslinked by polyaddition for a battery electrolyte according to one of Claims 1 to 6, **characterized in that** the POS (B) comprises:

a) at least two identical or different units of formula (III)

$$R_x\,H\,SiO_{\frac{4-x}{2}} \qquad \text{(III)}$$

in which formula:

- the R symbols, which are identical or different, each represent a monovalent hydrocarbon group chosen from a linear or branched alkyl radical having from 1 to 6 carbon atoms, a cycloalkyl radical having from 5

to 8 carbon atoms and a phenyl radical; and
- x is a number between 1 and 3 inclusive; and

b) optionally at least one siloxyl unit of formula $R_kSiO_{(4-k)/2}$, the R symbol having the same definition as above and k being a number between 1 and 3.

**8.** Composition which can be polymerized and/or crosslinked by polyaddition for a battery electrolyte according to Claims 1 to 7, **characterized in that** the POS (B) is an essentially linear random or block copolymer with the following mean general formula (IV):

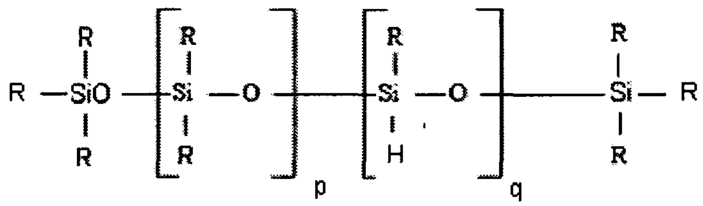

in which formula:

- the R symbols, which are identical or different, each represent a hydrogen, a monovalent hydrocarbon group chosen from a linear or branched alkyl radical having from 1 to 6 carbon atoms, a cycloalkyl radical having from 5 to 8 carbon atoms and a phenyl radical;
- p is an integer or fractional number greater than or equal to 0; and
- q is an integer or fractional number greater than or equal to 2 which can optionally be equal to 0, with the condition that, when q=0, then the two end M groups carry a hydrogen directly bonded to the silicon atom.

**9.** Composition which can be polymerized and/or crosslinked by polyaddition for a battery electrolyte according to one of the preceding claims, **characterized in that** the electrolyte salt (D) is composed:

- of a cation chosen from the group consisting of the following entities: metal cations, ammonium ions, amidinium ions and guanidinium ions; and;
- of an anion chosen from the group consisting of the following entities: chloride ions, bromide ions, iodide ions, perchlorate ions, thiocyanate ions, tetrafluoroborate ions, nitrate ions, $AsF_6^-$, $PF_6^-$, stearylsulfonate ions, trifluoromethanesulfonate ions, octylsulfonate ions, dodecylbenzenesulfonate ions, $R^4SO_3^-$, $(R^4SO_2)(R^5SO_2)N^-$ and $(R^4SO_2)(R^5SO_2)(R^6SO_2)C^-$; in each formula, the $R^4$, $R^5$ and $R^6$ radicals are identical or different and represent electron-withdrawing groups.

**10.** Composition which can be polymerized and/or crosslinked by polyaddition for a battery electrolyte according to Claim 9, **characterized in that** the $R^4$, $R^5$ and $R^6$ radicals are electron-withdrawing groups of perfluoroaryl or perfluoroalkyl type, the perfluoroalkyl group comprising from 1 to 6 carbon atoms.

**11.** Composition which can be polymerized and/or crosslinked by polyaddition for a battery electrolyte according to Claim 9, **characterized in that** the electrolyte salt (D) comprises a metal cation chosen from alkali metals and alkaline earth metals of Groups 1 and 2 of the Periodic Table [Chem. & Eng. News, vol. 63, No. 5, 26, of February 4, 1985].

**12.** Composition which can be polymerized and/or crosslinked by polyaddition for a battery electrolyte according to Claim 11, **characterized in that** the electrolyte salt (D) comprises a metal cation of lithium type.

**13.** Composition which can be polymerized and/or crosslinked by polyaddition for a battery electrolyte according to Claim 12, **characterized in that** the amount of the electrolyte salt (D) is determined so that the O/Li molar ratio is between 15 and 40 and preferably equal to 25.

**14.** Composition which can be polymerized and/or crosslinked by polyaddition for a battery electrolyte according to one of Claims 1, 12 and 13, **characterized in that** the electrolyte salt (D) is chosen from the group consisting of the following compounds:

$LiClO_4$, $LiBF_4$, $LiPF_6$, $LiAsF_6$, $LiCF_3SO_3$, $LiN(CF_3SO_2)_2$, $LiN(C_2F_5SO_2)_2$ and a mixture of these compounds.

**15.** Composition which can be polymerized and/or crosslinked by polyaddition for a battery electrolyte according to Claim 9, **characterized in that** the metal cation is chosen from transition metals.

**16.** Composition which can be polymerized and/or crosslinked by polyaddition for a battery electrolyte according to Claim 15, **characterized in that** the metal cation is chosen from the group consisting of manganese, iron, cobalt, nickel, copper, zinc, calcium and silver.

**17.** Composition which can be polymerized and/or crosslinked by polyaddition for a battery electrolyte according to one of the preceding claims, **characterized in that** it comprises an organic electrolyte (E).

**18.** Composition which can be polymerized and/or crosslinked by polyaddition for a battery electrolyte according to Claim 17, **characterized in that** the organic electrolyte (E) is chosen from the group consisting of the following compounds:

propylene carbonate, ethylene carbonate, diethyl carbonate, dimethyl carbonate, ethyl methyl carbonate, γ-butyrolactone, 1,3-dioxolane, dimethoxyethane, tetrahydrofuran, dimethyl sulfoxide and polyethylene glycol dimethyl ether.

**19.** Composition which can be polymerized and/or crosslinked by polyaddition for a battery electrolyte according to one of the preceding claims, **characterized in that** the hydrosilylation catalyst (C) is based on platinum.

## Patentansprüche

**1.** Zusammensetzung für Batterieelektrolyten, die durch Polyaddition polymerisiert und/oder vernetzt werden kann und Folgendes umfasst:

a) mindestens ein Polyorganosiloxan (POS) (A), das pro Molekül mindestens zwei C2-C6-Alkenylgruppen, welche an das Silicium gebunden sind, aufweist sowie mindestens eine Gruppe, die direkt an ein Siliciumatom gebunden ist, wobei sie eine Polyoxyalkylenether-Funktion (Poa) umfasst;
b) mindestens ein Polyorganosiloxan (POS) (B), das pro Molekül mindestens zwei Wasserstoffatome aufweist, die an das Silicium gebunden sind;
c) eine katalytisch wirksame Menge mindestens eines Hydrosilylierungskatalysators (C); und
d) mindestens ein Elektrolytsalz (D);

POS (A) ist ein statistisches, abschnittsweise oder in Blöcken strukturiertes, geradkettiges Copolymer, das im Mittel die folgende allgemeine Formel (II) hat:

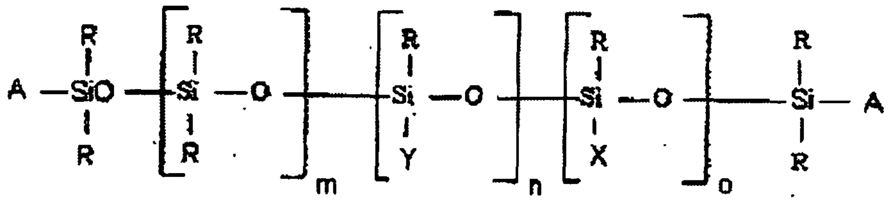

wobei es möglicherweise auch Bausteine der Formel $RSiO_{3/2}$ (T) aufweisen kann, wobei in dieser Formel:

- die Formelzeichen R, die identisch oder verschiedenartig sind, jeweils für eine einbindige Kohlenwasserstoffgruppe stehen, die aus einem geradkettigen oder verzweigten Alkylrest mit 1 bis 6 Kohlenstoffatomen, einem Cycloalkylrest mit 5 bis 8 Kohlenstoffatomen, einem Alkoxyrest und einem Phenylrest ausgewählt ist;
- die Formelzeichen Y, die identisch oder verschiedenartig sind, jeweils für eine $R^1$-Poa-Gruppe stehen, wobei das Formelzeichen $R^1$ für einen Rest steht, der 2 bis 50 Kohlenstoffatome umfasst, und das Formelzeichen Poa für eine Gruppe des Typs Polyoxyalkylenether steht, vorzugsweise für Polyoxyethylenether und/oder Polyoxypropylenether;
- die Formelzeichen X, die identisch oder verschiedenartig sind, jeweils für eine C2-C6-Alkenylfunktion stehen,

die an das Silicium gebunden ist, vorzugsweise für Vinyl oder Allyl;
- die Formelzeichen A, die identisch oder verschiedenartig sind, jeweils für ein Formelzeichen R, ein Formelzeichen X oder ein Formelzeichen Y stehen, wobei für die Formelzeichen dieselben Begriffsbestimmungen wie oben gelten;
- m eine ganze Zahl oder eine Bruchzahl ist, die größer oder gleich 0 ist;
- n eine ganze Zahl oder eine Bruchzahl ist, die größer oder gleich 1 ist; und
- o eine ganze Zahl oder eine Bruchzahl ist, die größer oder gleich 2 ist.

**2.** Zusammensetzung für Batterieelektrolyten, die durch Polyaddition polymerisiert und/oder vernetzt werden kann, nach Anspruch 1, **dadurch gekennzeichnet, dass** die Anteile der POS (A) und POS (B) derart sind, dass das Verhältnis der Anzahl von Wasserstoffatomen, die beim POS (B) an das Silicium gebunden sind, zur Anzahl der Alkenylreste, die über das POS (A) zugeführt werden, im Bereich von 0,4 bis 10 liegt.

**3.** Zusammensetzung für Batterieelektrolyten, die durch Polyaddition polymerisiert und/oder vernetzt werden kann, nach einem der vorhergehenden Ansprüche, **dadurch gekennzeichnet, dass** die Polyoxyalkylenether-Funktion (Poa) des POS (A) vom Typ Polyoxyethylenether und/oder Polyoxypropylenether ist.

**4.** Zusammensetzung für Batterieelektrolyten, die durch Polyaddition polymerisiert und/oder vernetzt werden kann, nach Anspruch 1, **dadurch gekennzeichnet, dass** die (-R'-Poa)-Gruppen aus den folgenden Gruppen ausgewählt sind:

$-(CH_2)_3-O-(CH_2CH_2-O)_m-CH_3$ ; $-(CH_2)_2-O-(CH_2CH_2-O)_m-CH_3$ ; $-(CH_2)_3-O-(CH(CH_3)-CH_2-O)_m-CH_3$ und $-(CH_2)_2-O-(CH(CH_3)-CH_2-O)_m-CH_3$
mit $m \leq 14$.

**5.** Zusammensetzung für Batterieelektrolyten, die durch Polyaddition polymerisiert und/oder vernetzt werden kann, nach Anspruch 1, **dadurch gekennzeichnet, dass**:

- m eine ganze Zahl oder eine Bruchzahl ist, die größer oder gleich 0 und kleiner oder gleich 200 ist;
- n eine ganze Zahl oder eine Bruchzahl ist, die größer oder gleich 1 und kleiner oder gleich 200 ist; und
- o eine ganze Zahl oder eine Bruchzahl ist, die größer oder gleich 2 und kleiner oder gleich 200 ist.

**6.** Zusammensetzung für Batterieelektrolyten, die durch Polyaddition polymerisiert und/oder vernetzt werden kann, nach Anspruch 1, **dadurch gekennzeichnet, dass** die Anzahl an Bausteinen, welche die Alkenylfunktion X tragen, derart gewählt ist, dass die Alkenylfunktionen X einen Gehalt ausmachen, der im Bereich von 0,5 bis 5 % liegt, ausgedrückt in % unter Bezugnahme auf das Gesamtgewicht von POS (A).

**7.** Zusammensetzung für Batterieelektrolyten, die durch Polyaddition polymerisiert und/oder vernetzt werden kann, nach einem der Ansprüche 1 bis 6, **dadurch gekennzeichnet, dass** POS (B) Folgendes umfasst:

a) mindestens zwei ähnliche oder verschiedenartige Bausteine der Formel (III)

$$R_x\,H\,SiO_{\frac{4-x}{2}} \qquad (III)$$

wobei in dieser Formel:

- die Formelzeichen R, die identisch oder verschiedenartig sind, jeweils für eine einbindige Kohlenwasserstoffgruppe stehen, die aus einem geradkettigen oder verzweigten Alkylrest mit 1 bis 6 Kohlenstoffatomen, einem Cycloalkylrest mit 5 bis 8 Kohlenstoffatomen und einem Phenylrest ausgewählt ist; und
- x eine ganze Zahl im Bereich von 1 bis 3 einschließlich ist; und

b) möglicherweise mindestens einen Siloxylbaustein der Formel $R_kSiO_{(4-k)/2}$, wobei für das Formelzeichen R dieselbe Begriffsbestimmung wie oben gilt und k eine Zahl im Bereich von 1 bis 3 ist.

**8.** Zusammensetzung für Batterieelektrolyten, die durch Polyaddition polymerisiert und/oder vernetzt werden kann,

nach den Ansprüchen 1 bis 7, **dadurch gekennzeichnet, dass** das POS (B) ein statistisches, abschnittsweise oder in Blöcken strukturiertes, im Wesentlichen geradkettiges Copolymer ist, das im Mittel die folgende allgemeine Formel (IV) hat:

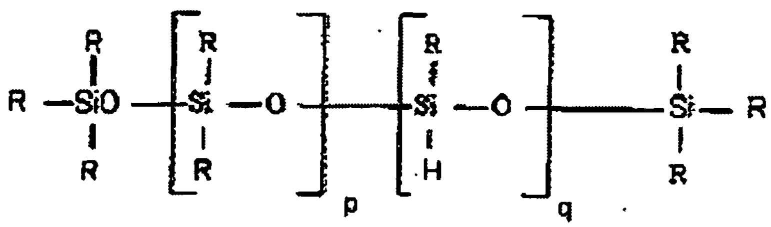

wobei in dieser Formel:

- die Formelzeichen R, die identisch oder verschiedenartig sind, jeweils für ein Wasserstoffatom, eine einbindige Kohlenwasserstoffgruppe, die aus einem geradkettigen oder verzweigten Alkylrest mit 1 bis 6 Kohlenstoffatomen, einem Cycloalkylrest mit 5 bis 8 Kohlenstoffatomen und einem Phenylrest ausgewählt ist, stehen;
- p eine ganze Zahl oder eine Bruchzahl ist, die größer oder gleich 0 ist; und
- q eine ganze Zahl oder eine Bruchzahl ist, die größer oder gleich 2 ist und möglicherweise gleich 0 sein kann, mit der Maßgabe, dass, wenn q = 0 ist, die beiden endständigen Gruppen M ein Wasserstoffatom tragen, das direkt an das Siliciumatom gebunden ist.

**9.** Zusammensetzung für Batterieelektrolyten, die durch Polyaddition polymerisiert und/oder vernetzt werden kann, nach einem der vorhergehenden Ansprüche, **dadurch gekennzeichnet, dass** das Elektrolytsalz (D) aus Folgendem besteht:

- einem Kation, das aus der Gruppe ausgewählt ist, die aus den folgenden Einheiten besteht: den Metallkationen, den Ammoniumionen, den Amidiniumionen und den Guanidiniumionen; und
- einem Anion, das aus der Gruppe ausgewählt ist, die aus den folgenden Einheiten besteht: den Chloridionen, den Bromidionen, den Iodidionen, den Perchlorationen, den Thiocyanationen, den Tetrafluorborationen, den Nitrationen, $AsF6^-$, $PF6^-$, den Stearylsulfonationen, den Trifluormethansulfonationen, den Octylsulfonationen, den Dodecylbenzolsulfonationen, $R^4SO_3^-$, $(R4SO_2)$ $(R^5SO_2)N^-$ und $(R^4SO_2)$ $(R^5SO_2)$ $(R^6SO_2)C^-$, wobei die Reste $R^4$, $R^5$ und $R^6$ in jeder Formel identisch oder verschiedenartig sind und für elektronenziehende Gruppen stehen.

**10.** Zusammensetzung für Batterieelektrolyten, die durch Polyaddition polymerisiert und/oder vernetzt werden kann, nach Anspruch 9, **dadurch gekennzeichnet, dass** die Reste $R^4$, $R^5$ und $R^6$ elektronenziehende Gruppen des Typs Perfluoraryl oder Perfluoralkyl sind, die 1 bis 6 Kohlenstoffatome umfassen.

**11.** Zusammensetzung für Batterieelektrolyten, die durch Polyaddition polymerisiert und/oder vernetzt werden kann, nach Anspruch 9, **dadurch gekennzeichnet, dass** das Elektrolytsalz (D) ein Metallkation umfasst, das aus den Alkali- und Erdalkalimetallen der Gruppen 1 und 2 des Periodensystems [Chem. & Eng. News, Ausg. 63, Nr. 5, 26 vom 4. Februar 1985] ausgewählt ist.

**12.** Zusammensetzung für Batterieelektrolyten, die durch Polyaddition polymerisiert und/oder vernetzt werden kann, nach Anspruch 11, **dadurch gekennzeichnet, dass** das Elektrolytsalz (D) ein Metallkation des Typs Lithium umfasst.

**13.** Zusammensetzung für Batterieelektrolyten, die durch Polyaddition polymerisiert und/oder vernetzt werden kann, nach Anspruch 12, **dadurch gekennzeichnet, dass** die Menge des Elektrolytsalzes (D) derart festgelegt wird, dass das Molverhältnis O/Li im Bereich von 15 bis 40 liegt und vorzugsweise gleich 25 ist.

**14.** Zusammensetzung für Batterieelektrolyten, die durch Polyaddition polymerisiert und/oder vernetzt werden kann, nach einem der Ansprüche 1, 12 oder 13, **dadurch gekennzeichnet, dass** das Elektrolytsalz (D) aus der Gruppe ausgewählt ist, die aus den folgenden Verbindungen besteht:

$LiClO_4$, $LiBF_4$, $LiPF_6$, $LiAsF_6$, $LiCF_3SO_3$, $LiN\ (CF_3SO_2)_2$, $LiN(C_2F_5SO_2)_2$ und einer Mischung aus diesen Verbindungen.

**15.** Zusammensetzung für Batterieelektrolyten, die durch Polyaddition polymerisiert und/oder vernetzt werden kann, nach Anspruch 9, **dadurch gekennzeichnet, dass** das Metallkation aus den Übergangsmetallen ausgewählt ist.

**16.** Zusammensetzung für Batterieelektrolyten, die durch Polyaddition polymerisiert und/oder vernetzt werden kann, nach Anspruch 15, **dadurch gekennzeichnet, dass** das Metallkation aus der Gruppe ausgewählt ist, die aus Mangan, Eisen, Kobalt, Nickel, Kupfer, Zink, Calcium, Mangan und Silber besteht.

**17.** Zusammensetzung für Batterieelektrolyten, die durch Polyaddition polymerisiert und/oder vernetzt werden kann, nach einem der vorhergehenden Ansprüche, **dadurch gekennzeichnet, dass** sie einen organischen Elektrolyten (E) umfasst.

**18.** Zusammensetzung für Batterieelektrolyten, die durch Polyaddition polymerisiert und/oder vernetzt werden kann, nach Anspruch 17, **dadurch gekennzeichnet, dass** der organische Elektrolyt (E) aus der Gruppe ausgewählt ist, die aus den folgenden Verbindungen besteht: Propylencarbonat, Ethylencarbonat, Diethylcarbonat, Dimethylcarbonat, Ethylmethylcarbonat, γ-Butyrolacton, 1,3-Dioxolan, Dimethoxyethan, Tetrahydrofuran, Dimethylsulfoxid und Polyethylenglykol-Dimethylether.

**19.** Zusammensetzung für Batterieelektrolyten, die durch Polyaddition polymerisiert und/oder vernetzt werden kann, nach einem der vorhergehenden Ansprüche, **dadurch gekennzeichnet, dass** der Hydrosilylierungskatalysator (C) auf Platinbasis ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 200025323 A
- US 2823218 A
- US 2970150 A
- US 3775452 A
- FR 2825709
- FR 2801887


### Littérature non-brevet citée dans la description


- *Chem. & Eng. News,* 04 Février 1985, vol. 63 (5), 26